Europäisches Patentamt

European Patent Office

Office européen des brevets

(19)

(11) Publication number: **0 511 635 B1**

## EUROPEAN PATENT SPECIFICATION

(12)

(45) Date of publication of patent specification: **21.06.95**

(51) Int. Cl.[6]: **C09J 151/00**, C08F 255/02, C08F 8/38, //C08L5/16, (C08F255/02,220:00)

(21) Application number: **92107223.7**

(22) Date of filing: **28.04.92**

(54) Multicomponent adhesive system.

(30) Priority: **30.04.91 IT MI911188**

(43) Date of publication of application:
**04.11.92 Bulletin 92/45**

(45) Publication of the grant of the patent:
**21.06.95 Bulletin 95/25**

(84) Designated Contracting States:
**BE CH DE ES FR GB IT LI NL SE**

(56) References cited:
**EP-A- 0 334 376**   **EP-A- 0 334 377**
**EP-A- 0 334 378**   **EP-A- 0 411 951**
**EP-A- 0 441 690**   **US-A- 4 874 875**

(73) Proprietor: **MINISTERO DELL' UNIVERSITA' E DELLA RICERCA SCIENTIFICA E TEC-NOLOGICA**
**76, Lungotevere Thaon de Revel**
**I-00196 Roma (IT)**

(72) Inventor: **Di Ruocco, Vittorio, Dr.**
**21, Corso Milano**
**I-28100 Novara (IT)**
Inventor: **Garbassi, Fabio, Dr.**
**6, Via C. Porta**
**I-28100 Novara (IT)**

(74) Representative: **Weinhold, Peter, Dr. et al**
**Patentanwälte**
**Dr. Weinhold, Dannenberg,**
**Dr. Gudel, Schubert**
**Siegfriedstrasse 8**
**D-80803 München (DE)**

Rank Xerox (UK) Business Services
(3.10/3.09/3.3.3)

EP 0 511 635 B1

**Description**

The present invention relates to a multicomponent adhesive system (in the following also referred to as "adhesive composition" although the components thereof will not necessarily be combined in a single composition as explained in more detail below); in particular the invention relates to an adhesive system of the acrylic type.

The use of structural adhesives has substantially increased in the past years, mainly in the aerospace and automotive sectors, resulting in the development of new high-performance adhesive systems. The use of structural adhesives in said sectors has facilitated the replacement of the conventional metallic materials with polymeric materials; furthermore, the generation and development of said structural acrylic adhesives has permitted their application also on non-pretreated surfaces, or even not perfectly clean surfaces, without adversely affecting too much the adhesive performance. The structural acrylic adhesives generally consist of a mixture of acrylic polymers, which polymerize according to a radical mechanism. They exhibit mechanical properties comparable with those of epoxide-based adhesives, with the advantage of a much shorter setting time, higher shear and impact strengths and the possibility of realizing breakage-resistant joints, even with not very clean surfaces.

Since the acrylic matrices are brittle after cross-linking the addition of an elastomer to the formulation increases the tenacity thereof. The mechanical properties of the brittle polymers can be improved, in fact, by incorporating into the matrix particles of an elastomeric phase, the presence of which increases the tenacity of the material.

US-A-3,591,438 describes a two-component composition in which the adhesive component consists of (i) an acrylic ester which contains a peroxide (as polymerisation starter) and (ii) a starter activating agent consisting of a mixture based on aldehyde-amine condensation products, optionally combined with metal salts. US-A-3,642,750 describes a sealant composition comprising an acrylic ester, a monovalent cycloaliphatic alcohol and an organic peroxide. Another sealant composition described in US-A-3,203,941 is composed of tetraethylene glycol dimethacrylate, a polyamine and an organic acid.

In all adhesive compositions of the prior art the main components thereof are (a) a sulphur-containing elastomer, selected from chlorosulphonated polyethylene and mixtures of sulphonyl chloride with chlorinated polyethylene; (b) a polymerizable vinyl monomer; (c) an organic peroxide as starter.

Said compositions are not completely free of drawbacks; in fact, they exhibit, for example, a short pot life. Furthermore, during their preparation (on an industrial scale) considerable amounts of peroxides or hydroperoxides have to be handled, which, if not handled with the utmost care, can lead to explosions, particularly if the temperature rises. Lastly, the tendency of the peroxides to decompose reduces their capability of starting the polymerization reaction. US-A-4,447,588 radically eliminates such problems by utilizing (instead of the peroxides) compounds based on triazine, which are by far more stable than the peroxides and hydroperoxides; said triazinic compounds, however, are not readily available and/or are difficult to synthesize.

It has now been found that the above mentioned drawbacks can be drastically reduced by new multicomponent structural adhesives which have a longer pot life and an excellent setting time and are totally free of hazards associated with the handling of hydroperoxides, peroxides or similar starters.

In its broadest aspect the present invention provides a multi-component adhesive system comprising:

(A) a solution of an elastomer in a polymerizable acrylic monomer;

(B) a polymerization starter selected from peroxides, hydroperoxides, peracids, peresters, oxaziridines, fluorinated oxaziridines and mixtures thereof; and

(C) a starter activating agent;

which is characterized by the presence of (D) a starter stabilizing agent selected from cyclodextrins, calyxarenes, cavitands and mixtures thereof. Preferably the above composition additionally contains (E) a cross-linking agent selected, for example, from acrylic and methacrylic esters of diols, triols and polyols, in particular ethylene glycol diacrylate and dimethacrylate. The cross-linking agent is usually added to the solution in amounts of from 0.1 to 2% by weight referred to the composition.

Specific examples of suitable acrylic monomers for component (A) are methacrylic acid, acrylic acid, $C_1$-$C_{20}$ (cyclo)alkyl esters thereof such as methyl methacrylate, ethyl methacrylate, methyl acrylate, ethyl acrylate, butyl methacrylate, cyclohexyl methacrylate, hexyl methacrylate, 2-ethylhexyl methacrylate, lauryl methacrylate, butyl acrylate, cyclohexyl acrylate, hexyl acrylate, 2-ethylhexyl acrylate, lauryl acrylate and glycidyl methacrylate, acrylonitrile, methacrylonitrile, acrylamide, methacrylamide and mixtures thereof. Preferred monomers are methyl methacrylate, ethyl methacrylate and cyclohexyl methacrylate, preferably in admixture with methacrylic acid; other monomers which are copolymerizable with the above monomers are indicated in IT-A-19950 A/88.

Preferred elastomers for use in component (A) are chlorosulphonated polyethylene and chlorosulphonated copolymers of ethylene with minor amounts of propylene and/or (one or more) other (alpha-) olefins having 4 to 12 (and preferably 4 to 10) carbon atoms. The chlorosulphonated polyethylene can be obtained, as is known, by reacting linear or branched polyethylene with sulphonyl chloride or with $SO_2$ and chlorine; it is marketed, e.g. under the trade name "HYPALON®". Alternative chlorosulphonated polymers are mixtures of sulphonyl chlorides with chlorinated polyethylene. The sulphonyl chlorides can be selected, for example, from $C_1$-$C_{12}$ alkyl sulphonyl chlorides (such as methane or butane sulphonyl chloride), $C_6$-$C_{24}$ aryl sulphonyl chlorides (such as benzene or toluene sulphonyl chloride) and sulphonyl chlorides containing heteroatoms such as diphenyl-ether-4,4'-disulphonyl chloride.

As a further alternative it is possible to use any other elastomer, either natural or synthetic, which is soluble in the acrylic monomer, for example polybutadiene, butadiene/acrylonitrile copolymers, elastomeric polyacrylates, polyisoprene, polychloroprene, polyurethane elastomers or fluorinated elastomers, optionally utilized in admixture with said sulphonyl chlorides. Elastomers suited to this purpose are listed, e.g., in US-A-4,112,013; 4,182,644; 4,451,615; and 4,645,810 and in IT-A-19950 A/88 and 22141 A/90. The polymer/monomer ratios can vary over a wide range; a range of 25 to 500 (e.g. 100 to 250) parts by weight of monomer per 100 parts by weight of polymer is preferred. The amount of sulphonyl chloride, if any, usually ranges from 0.1 to 5% by mols with respect to the double bonds of the acrylic monomer; amounts above 5% by mols can be used, without improving, however, the aggregation characteristics of the adhesive system.

As polymerization starters (B) it is possible to use any of the corresponding usual free radical generators described, for example, in "Free Radicals in Solution" by C. Walling, J. Wiley & Sons, New York (1957), and in "The Chemistry of Organic Film Formers" by D.H. Solomon, J. Wiley & Sons, New York, (1967), page 135. The amount of starter generally ranges from 0.1 to 2% by weight of the composition. If the starter is a peroxide compound it preferably is selected from cumene hydroperoxide (CHP), tert-butyl hydroperoxide (T-BHP), n-butyl hydroperoxide (n-BHP), tert-amyl hydroperoxide, methyl ethyl ketone hydroperoxide, cyclohexanone peroxide, 3,5-dimethyl-3,5-dihydroperoxy-1,2-dioxolane, diethyl ketone hydroperoxide, methyl isobutyl ketone hydroperoxide and mixtures thereof. Most preferred are cumene hydroperoxide and tert-butyl hydroperoxide. As regards examples of peracids and peresters suitable as component (B), reference is made to US-A-4,429,088.

Suitable oxaziridines (B) can be selected, e.g., from the compounds described in IT-A-19950 A/88 and 20579 A/90. Suitable examples of fluorinated oxaziridines (B) may be found in US-A-4,874,875 and 4,948,903; excellent results may be obtained by using 3,3-pentamethylene-2-cyclohexyl oxaziridine.

The starter activating agent (C) can be selected from a wide range of compounds. Typical examples are the condensation products of aldehydes with amines, which products may be used alone or in admixture with metal salts or other suitable additives, as described in EP-A-334,376; 334,377 and 334,378. Particularly advantageous results may be obtained by using the condensation products of butyraldehyde with aniline, preferably in admixture with a copper salt, for example copper saccharinate. Said products (known under the designation DHP) are marketed as VANAX ® 808. The weight ratio activating agent (C)/ starter (B) usually ranges from 1:1 to 10:1 (e.g. 3:1 to 8:1).

In the following the Starter-stabilizing agents (D) which characterize the present compositions will be described. The cyclodextrins (of the alpha, beta or gamma type) are well-known macromolecular organic compounds having an inner cavity of non-polar nature, described, e.g., in HU-A-196,578 and by Y. Matsui et al., Bull. Chem. Soc. Japan; 43; 1909 (1970); particularly preferred are the beta cyclodextrins (beta-CD).

The "CALYXARENES" are macromolecular organic compounds which exhibit a cavity (calyx) defined by aromatic portions of the molecule (aryl moieties); for a more exhaustive definition, reference is made, for example, to US-A-4,699,966, International patent application WO 89/08092 and JP-A-1988/197544 and 1989/007837.

The "CAVITANDS" also are well-known organic compounds characterized by a pre-organized lyophilic cavity. They are described, for example, in IT-A-22522 A/89.

Of course, other stabilizers can also be included in the present compositions. Examples thereof are antioxidants such as phenolic compounds. A particularly preferred antioxidant is BHT (di-tert-butyl para-cresol).

To avoid possible misunderstandings, the following is to be kept in mind:

- cyclodextrins, calyxarenes and cavitands are starter stabilizing agents which surprisingly are capable of housing a peroxide in their respective cavity and of preventing the dangerous thermal decomposition of the starter, without changing (adversely affecting) at all its valuable characteristics (capability of starting the polymerization) within the adhesive system; this property has for the first time been observed by the applicant;

- BHT and other analogous stabilizers of the phenolic type, e.g. those described in EP-A-334,378, conversely are agents which act chemically by blocking the radicals which form as a result of the decomposition of the starter. Thus, the use of BHT and similar compounds may also be dispensed with for the purposes of the present invention, although said additional use is preferred.

The cyclodextrins (and the other macrocycles) inhibit the thermal decomposition of a (housed) peroxide up to temperatures of about 150 to 200°C and sometimes even higher. Furthermore it was found possible to keep some of these complexed peroxides, among which cumene hydroperoxide, under high vacuum (2 mm Hg) at 56°C without hydroperoxide losses.

The adhesive compositions according to the present invention are characterized by the presence of an effective radical polymerization redox system, whereby it is possible to obtain:
- longer pot lifes, measured as the time during which no viscosity increase exceeding 10% occurs when the samples are subjected to accelerated curing at 40°C;
- very short setting times measured at the time after which it is not possible to separate two glued test pieces by manually applying a shear stress; said setting times usually range from less than 15 seconds to more than 2 minutes;
- a higher thermal stability, i.e. no decomposition of the peroxide up to a temperature of 150 to 200°C.

The adhesive systems according to the present invention can be utilized, e.g., according to the primer technique, which comprises the application of the adhesive component onto one surface and the application of the activating agent onto the other surface. Furthermore, they can be utilized not only at room temperature but also at higher temperatures, both during setting and during operation. Lastly, the systems according to the invention can be utilized on porous or smooth surfaces, without necessarily requiring a pretreatment of the surface onto which they are to be applied. Materials which can be adhered to each other by means of the acrylic adhesives according to the present invention are, e.g., metals and alloys thereof such as steel, aluminium and copper, polymeric materials, wood, glass, paper, prepainted surfaces, etc.

The following examples are given for merely illustrative purposes and are not to be construed as a limitation of the scope of the invention.

In all tests the adhesive systems were prepared by keeping the mixtures under stirring at room temperature until the polymer had completely dissolved. The resulting adhesive systems were characterized by measuring the shear strength according to ASTM D 1002-72 (1983) and the setting time. In detail, six simple lap joints were prepared for each adhesive system, using steel test-pieces (120 x 25 x 1.5 mm) which had been degreased with trichloroethylene and pickled. Onto one test-piece there was spread a film of adhesive paste having a thickness of about 0.5 mm, and onto the other test-piece there was spread a film of activating agent consisting of DHP (+ copper saccharinate); then the two test-pieces were coupled. The lap shear strength (shear stress) was measured by using a MTS 810 apparatus, according to ASTM D 1002-72 (1983), maintaining a constant speed of 1 mm/minute.

The setting time was measured by using the same gluing method, the same test-pieces to be coupled and the same treatments (as used for preparing the joints utilized for measuring the shear strength) and measuring the minimum setting time necessary to avoid breaking of the joint when shear stress was applied manually.

EXAMPLE 1 (comparative)

34.5 g of ethyl methacrylate were added to a mixture of 30 g of chlorosulphonated polyethylene (containing 30% by weight of chlorine, known under the tradename HYPALON® 20), 47 millimols of sulphonyl chloride per 100 g of polymer, 33.8 g of methacrylic acid and 1 g of ethylene glycol dimethacrylate. The above components were mixed at room temperature until complete dissolution (after 24 hours) of the polymer. The adhesive paste so obtained was completed by adding 0.3 g of di-tert-butyl para-cresol (BHT) and 0.4 g of a radical generating agent of the usual type (starter), i.e., cumene hydroperoxide (CHP). The Brookfield viscosity of the paste was 34,000 mPa.s. Then steel test-pieces (120 x 25 x 1.5 mm) were prepared by pickling them for 4 minutes in a solution containing 10% by weight of $H_2SO_4$, 10% by weight of $HNO_3$ and 80% by weight of water. A paste film having a thickness of about 0.5 mm was spread onto one test-piece, while onto the other test-piece there was spread the activating agent, i.e., a butyraldehyde-aniline condensation product (DHP activating agent described in US-A-3,591,438) containing 0.01% by weight of mono-valent copper, introduced in the form of copper saccharinate. The two test-pieces were coupled and compressed at a pressure of about 2 $N/m^2$. The lap shear strength was measured by means of a INSTRON TM-SM/10 dynamometer according to ASTM D 1002-72 (1983), maintaining a shear speed of 1 mm/minute, after 24 hours at room temperature (+ 1 hour at 100°C) following the overlapping

4

of the two test-pieces. The results are reported in Table 1, where also the results of other examples are indicated.

EXAMPLE 2 (comparative)

Example 1 was repeated using, instead of CHP, 0.4 g of tert-butyl hydroperoxide (t-BHP); the results, not yet satisfactory as regards the pot life, are reported in Table 1. The Brookfield viscosity of the paste was 36,000 mPa.s.

EXAMPLE 3

Example 1 was repeated but using, instead of the simple starter (CHP), 4 g of the corresponding complexed (with beta-cycodextrin) starter, corresponding to about 0.4% of free CHP. The Brookfield viscosity was 48,000 mPa.s. Data and results are reported in Table 1. Said complexed starter had previously been prepared in the following way:
10 g of beta-cyclodextrin were dissolved in 500 ml of deionized water at 45°C whereafter 5 g of CHP were added, maintaining the solution under constant stirring for about 2 hours. The solution was then cooled in ice and thereafter the resulting precipitate was separated from the mother liquor by filtration and washed with cold water. While the cumene hydroperoxide (not complexed) explodes at about 120°C, the CHP complexed as described above did not explode even when heated to 200°C for about 5 minutes.

EXAMPLE 4

Example 3 was repeated, using another type of complexed starter, namely 4 g of tert-butyl hydroperoxide complexed with beta-cyclodextrin (corresponding to 0.4% of free t-BHP). Said complexed starter had previously been prepared by following the procedure of example 3. While the (non-complexed) tert-butyl hydroperoxide explodes at 109°C, the complexed t-BHP was heated for about 5 minutes at 200°C without observing any explosive decomposition phenomenon. Data and results are reported in Table 1. The shear strength was also measured at various curing stages (for all compositions of examples 1 to 4) and the curing was carried out with the paste maintained at a temperature of 40°C. The results are reported in Table 2.

T A B L E  1

| Ex. No. | Starter | Setting time (seconds) | Deceomposition temperature of the peroxide and complexes | Pot life (days) | Shear strength $(N/mm^2)$ | Viscosity (mPa·s) |
|---|---|---|---|---|---|---|
| 1(*) | CHP (0.40 g) | 45 | about 120°C (**) | 5 | 23.0 | 34,000 |
| 2(*) | t-BHP (0.40 g) | 60 | 109°C (**) | 7 | 20.1 | 36,000 |
| 3 | CHP+beta CD(4 g) | 45 | higher than 200°C (***) | 70 | 22.3 | 48,000 |
| 4 | t-BHP+betaCD(4 g) | 60 | higher than 200°C (***) | 60 | 20.5 | 40,000 |

CHP = cumene hydroperoxide
t-BHP = tert-butyl hydroperoxide
CD = cyclodextrin
(*) comparative example; (**) neat peroxide; (***) complexed peroxide.

TABLE 2

SHEAR STRENGTH (N/mm$^2$)

| Example No. | After 5 days | After 10 days | After 30 days | After 60 days |
|---|---|---|---|---|
| 1 (*) | 6.8 | - | - | - |
| 2 (*) | - | 8.5 | - | - |
| 3 | - | 21.0 | 18.9 | 16.2 |
| 4 | - | 20.0 | 18.8 | 17.0 |

(*) Comparative example

EXAMPLE 5 (comparative)

40 g of ethyl methacrylate were added to a mixture of 35 g of the chlorosulphonated polyethylene of example 1, 22.3 g of methacrylic acid and 1 g of ethylene glycol dimethacrylate. The mixture was blended in a reactor at room temperature until complete dissolution, after 24 hours, of the polymer. The resulting adhesive paste was completed by adding 0.3 g of di-tert-butyl para-cresol (BHT) and 0.4 g of a radical-generating agent (starter), i.e., cumene hydroperoxide (CHP). The Brookfield viscosity of the paste was 80,000 mPa.s. As regards the preparation of the test-pieces and the corresponding tests, reference is made to ex. 1. Data and results are reported in Table 3.

EXAMPLE 6 (comparative)

Example 5 was repeated, using 0.4 g of tert-butyl hydroperoxide (t-BHP) instead of CHP. The results, still very unsatisfactory (as regards the pot life), are reported in Table 3. The Brookfield viscosity was 76,000 mPa.s.

EXAMPLE 7

Example 5 was repeated but using, instead of the simple starter (CHP), 4 g of the corresponding complexed (with beta-cyclodextrin) starter. The Brookfield viscosity was 86,000 mPa.s. Data and results are reported in Table 3. From the comparison with example 3 is can be taken that a variation of the weight ratio ethyl methacrylate/methacrylic acid (from 1:1 to 2:1) and a slight increase of the amount of elastomer do not substantially change the technological characteristics (as to adhesiveness).

EXAMPLE 8

Example 7 was repeated, using another type of complexed starter, namely 4 g of beta-cyclodextrin complexed t-BHP. The viscosity was 80,000 mPa.s. Data and results are reported in Table 3. The pastes of examples 5 to 8 were subjected to curing at 50°C; the results obtained are reported in Table 4.

EXAMPLE 9 (comparative)

Example 1 was repeated, using 0.4 g of 3,3-pentamethylene-2-cyclohexyl-oxaziridine instead of CHP; data and results are reported in Table 5.

EXAMPLE 10

Example 3 was repeated using, instead of the complex (CHP + beta-CD), 4 g of the complex of 3,3-pentamethylene-2-cyclohexyl-oxaziridine and beta-CD. The latter complex had been prepared according to the modalities described in example 3, but using oxaziridine instead of CHP; data and results are reported in Table 5.

T A B L E 3

| Example No. | Starter (g) | Setting time (seconds) | Pot life (days) | Shear strength $(N/mm^2)$ | Viscosity (mPa·s) |
|---|---|---|---|---|---|
| 5(*) | CHP (0.4) | 45 | 8 | 21.5 | 80,000 |
| 6(*) | t-BHP (0.4) | 80 | 8 | 20.2 | 76,000 |
| 7 | CHP+beta CD(4) | 60 | 60 | 21.5 | 86,000 |
| 8 | t-BHP+beta CD(4) | 60 | 50 | 21.3 | 80,000 |

(*) Comparative example

## T A B L E  4

| Example No. | SHEAR STRENGTH $N/mm^2$) | | |
|---|---|---|---|
| | After 10 days | After 30 days | After 60 days |
| 5(*) | 9,2 | - | - |
| 6(*) | 8,2 | - | - |
| 7 | 21,2 | 20,0 | 16,6 |
| 8 | 20,2 | 19,8 | 13,3 |

(*) Comparative example

EP 0 511 635 B1

**T A B L E 5**

| Ex. No. | Starter | Setting time (seconds) | Decomposition temperature of oxaziridine and complex | Pot life (days) | Shear strength $(N/mm^2)$ | Viscosity (mPa.s.) |
|---|---|---|---|---|---|---|
| 9(*) | Oxaz. (0.40g) | 45 | about 120°C (**) | 8 | 20.7 | 56,000 |
| 10 | Oxaz.+CD (4 g) | 30 | higher than 200°C (***) | 60 | 21.1 | 60,000 |

Oxaz. = oxaziridine
CD = cyclodextrin
(*) Comparative example; (**) Neat oxaziridine; (***) Complexed oxaziridine.

**Claims**

1. A multicomponent adhesive system comprising:
   (A) a solution of an elastomer in a polymerizable acrylic monomer;

11

(B) a polymerization starter selected from peroxides, hydroperoxides, peracids, peresters, oxaziridines, fluorinated oxaziridines and mixtures thereof;
(C) a starter activating agent; and
(D) a starter stabilizing agent selected from cyclodextrins, calyxarenes, cavitands and mixtures thereof.

2. The adhesive system of claim 1, additionally comprising (E) a cross-linking agent, preferably selected from (meth)acrylic esters of diols, triols and polyols, in particular ethylene glycol di-acrylate and di-methacrylate, preferably in amounts of from 0.1 to 2% by weight, based on the composition.

3. The adhesive system of any one of claims 1 and 2, wherein the acrylic monomer of component (A) is selected from methyl methacrylate, ethyl methacrylate, cyclohexyl methacrylate and mixtures of one or more of said methacrylates with methacrylic acid.

4. The adhesive system of any one of claims 1 to 3, wherein the elastomer of component (A) is selected from:
   - chlorosulphonated polyethylene;
   - chlorosulphonated copolymers of ethylene with minor amounts of propylene and/or $\alpha$-olefins having 4 to 12 carbon atoms;
   - mixtures of one or more sulphonyl chlorides with chlorinated polyethylene;
   and mixtures thereof.

5. The adhesive system of any one of claims 1 to 4, wherein the starter (B) is selected from cumene hydroperoxide, tert-butyl hydroperoxide, 3,3-pentamethylene-2-cyclohexyl-oxaziridine and mixtures thereof.

6. The adhesive system of any one of claims 1 to 5, wherein the starter activating agent (C) is selected from condensation products of aldehydes with amines, optionally in combination with metal salt, in particular copper saccharinate.

7. The adhesive system of any one of claims 1 to 6, wherein the starter-stabilizing agent (D) comprises beta-cyclodextrin.

8. The adhesive system of any one of claims 1 to 7, additionally comprising 2,6-di-tert-butyl para-cresol.

9. Complexes of cyclodextrins, in particular beta-cyclodextrin, with oxaziridines and fluorinated oxaziridines.

10. Complex according to claim 9, namely the complex of beta-cyclodextrin with 3,3-pentamethylene-2-cyclohexyl-oxaziridine.

**Patentansprüche**

1. Mehrkomponenten-Klebemittelsystem, welches umfaßt:
   (A) eine Lösung eines Elastomers in einem polymerisierbaren Acryl-Monomer,
   (B) einen Polymerisationsstarter, ausgewählt aus Peroxiden, Hydroperoxiden, Persäuren, Perestern, Oxaziridinen, fluorierten Oxaziridinen und deren Mischungen,
   (C) ein Starteraktivierungsmittel und
   (D) ein Starterstabilisierungsmittel, ausgewählt aus Cyclodextrinen, Calyxarenen, Hohlraumbildnern (Cavitands) und deren Mischungen.

2. Klebemittelsystem gemäß Anspruch 1, welches zusätzlich umfaßt:
   (E) ein Vernetzungsmittel, Vorzugsweise ausgewählt aus (Meth)acrylestern von Diolen, Triolen und Polyolen, insbesondere Ethylenglykol-diacrylat und -dimethacrylat, vorzugsweise in Mengen zwischen 0.1 und 2 Gew.-%, bezogen auf die Zusammensetzung.

3. Klebemittelsystem gemäß irgendeinem der Ansprüche 1 und 2, worin das Acrylmonomer von Komponente (A) ausgewählt ist aus Methylmethacrylat, Ethylmethacrylat, Cyclohexylmethacrylat und Mischungen eines oder mehrerer dieser Methacrylate mit Methacrylsäure.

**4.** Klebemittelsystem gemäß irgendeinem der Ansprüche 1 bis 3, worin das Elastomer von Komponente (A) ausgewählt ist aus:
- chlorsulfoniertem Polyethylen,
- chlorsulfonierten Copolymeren von Ethylen mit geringen Mengen Propylen und/oder α-Olefinen mit 4 bis 12 Kohlenstoffatomen,
- Mischungen von einem oder mehreren Sulfonylchloriden mit chloriertem Polyethylen
und deren Mischungen.

**5.** Klebemittelsystem gemäß irgendeinem der Ansprüche 1 bis 4, worin der Starter (B) ausgewählt ist aus Cumolhydroperoxid, tert-Butylhydroperoxid, 3,3-Pentamethylen-2-cyclohexyloxaziridin und deren Mischungen.

**6.** Klebemittelsystem gemäß irgendeinem der Ansprüche 1 bis 5, worin das Starteraktivierungsmittel (C) ausgewählt ist aus Kondensationsprodukten von Aldehyden mit Aminen, gegebenenfalls in Kombination mit Metallsalz, insbesondere Kupfersaccharinat.

**7.** Klebemittelsystem gemäß irgendeinem der Ansprüche 1 bis 6, worin das Starterstabilisierungsmittel (D) beta-Cyclodextrin umfaßt.

**8.** Klebemittelsystem gemäß irgendeinem der Ansprüche 1 bis 7, welches zusätzlich 2,6-Di-tert-butyl-para-kresol umfaßt.

**9.** Komplexe von Cyclodextrinen, insbesondere beta-Cyclodextrin, mit Oxaziridinen und fluorierten Oxaziridinen.

**10.** Komplex gemäß Anspruch 9, nämlich der Komplex von beta-Cyclodextrin mit 3,3-Pentamethylen-2-cyclohexyloxaziridin.

**Revendications**

**1.** Système adhésif multicomposant contenant :
(A) une solution d'un élastomère dans un monomère acrylique polymérisable,
(B) un amorceur de polymérisation choisi parmi les peroxydes, les hydroperoxydes, les peracides, les peresters, les oxaziridines, les oxaziridines fluorés et les mélanges de ceux-ci, et
(C) un agent activant l'amorceur, et
(D) un agent stabilisant l'amorceur choisi parmi les cyclodextrines, les calyxarènes, les cavitands et des mélanges de ceux-ci

**2.** Système adhésif conforme à la revendication 1, contenant en outre (E) un agent de réticulation, choisi de préférence parmi les esters d'acide (méth)acrylique et de diols, de triols et de polyols, en particulier le diacrylate et diméthacrylate d'éthylèneglycol, de préférence à raison de 0,1 à 2 % en poids par rapport à la composition.

**3.** Système adhésif conforme à une des revendications 1 et 2, dans lequel le monomère acrylique du composant (A) est choisi parmi le méthacrylate de méthyle, le méthacrylate d'éthyle, le méthacrylate de cyclohexyle et les mélanges d'un ou de plusieurs desdits méthacrylates avec de l'acide méthacrylique.

**4.** Système adhésif conforme à une quelconque des revendications 1 à 3 dans lequel l'élastomère du composant (A) est choisi parmi les suivants :
- un polyéthylène chlorosulfoné,
- des copolymères chlorosulfonés d'éthylène contenant des quantités faibles de propylène et/ou d'α-oléfines comportant de 4 à 12 atomes de carbone,
- des mélanges d'un ou de plusieurs chlorures de sulfonyle avec du polyéthylène chloré,
et des mélanges de ceux-ci.

**5.** Système adhésif conforme à une quelconque des revendications 1 à 4 dans lequel l'amorceur (B) est choisi parmi l'hydroperoxyde de cumyle, l'hydroperoxyde de *t*-butyle, la 3,3-pentaméthylène-2-cyclohexyl-oxaziridine et des mélanges de ceux-ci.

**6.** Système adhésif conforme à une quelconque des revendications 1 à 5 dans lequel l'agent activant l'amorceur (C) est choisi parmi les produits de condensation d'aldéhydes avec des amines, éventuellement en combinaison avec un sel métallique, en particulier un saccharinate de cuivre.

**7.** Système adhésif conforme à une quelconque des revendications 1 à 6 dans lequel l'agent stabilisant l'amorceur (D) contient de la *β*-cyclodextrine.

**8.** Système adhésif conforme à une quelconque des revendications 1 à 7, contenant en outre du 2,6-di-*t*-butyl-para-crésol.

**9.** Complexes de cyclodextrines, en particulier de *β*-cyclodextrine, avec des oxaziridines et oxaziridines fluorées.

**10.** Complexe conforme à la revendication 9, à savoir le complexe de *β*-cyclodextrine avec la 3,3-pentaméthylène-2-cyclohexyl-oxaziridine.